# EUROPÄISCHE PATENTANMELDUNG

(11) **EP 1 003 309 A2**
(43) Veröffentlichungstag der Anmeldung: **24.05.2000**
(21) Anmeldenummer: 99122828.9
(22) Anmeldetag: 17.11.1999
(51) Int. Cl.: H04L 25/02

(54) **Vorrichtung zur Ankopplung an einen Bus ohne polaritätsfehler**

(30) Priorität: 19.11.1998 DE 19853404; 07.01.1999 DE 19900246
(71) Anmelder: Firma Lingg & Janke OHG, 78315 Radolfzell (DE)
(72) Erfinder: Janke, Peter, 78462 Konstanz (DE)
(74) Vertreter: Weiss, Peter, Dr.

(57) **Zusammenfassung**

Beschrieben wird die Ankopplung an einen Bus (20) mit polaritätsunterschiedlichen Leitungen mittels eines Polaritätswandlers (100), der derart ausgestaltet ist, dass unabhängig von der Polarität busseitiger Signale die Signale auf der anderen Seite des Polaritätswandlers nach ihrer Polarität getrennt ausgegeben werden. Der Polaritätswandler weist vorzugsweise einen Brückengleichrichter, einen Phasenumkehr-IC oder einen oder mehrere Optokoppler auf.

Durch den Polaritätswandler wird die Busankopplung deutlich vereinfacht, da die Polarität der Busleitungen völlig unerheblich ist. Polaritätsanschlussfehler werden so vermieden. Zudem kann das Anschliessen schneller und sicherer erfolgen, da die Polaritäten der Busleitungen nicht mehr zu prüfen sind. Dies erlaubt insbesondere auch ein Anschliessen durch nicht-ausgebildete Personen, so dass die Anschlusskosten erheblich reduziert werden können.

## Beschreibung

Die vorliegende Erfindung betrifft eine Vorrichtung zur Ankopplung an einen Bus mit polaritätsunterschiedlichen Leitungen.

Neben der bisherigen üblichen Ausrichtung auf das blosse Verteilen und Schalten elektrischer Energie treten bei der modernen Gebäudeinstallation zunehmend Installationsbus-Systeme in den Vordergrund.

Ein solches Installationsbus-System ist beispielsweise der Europäische Installationsbus (EIB) der European Installation Bus Association EIBA s.c., Brüssel, und wird beschrieben unter anderem im 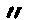 Handbuch Gebäudesystemtechnik", 2. Auflage, 1994, des Zentralverbands Elektrotechnik- und Elektroindustrie e.V. (ZVEI) und des Zentralverbands der Deutschen Elektrohandwerke (ZVEH). Beim EIB gibt es nur noch eine Leitung, über die alle Busteilnehmer über ein Adernpaar miteinander kommunizieren. Die Starkstromleitungen werden nicht mehr als Steuerleitungen sondern nur noch zur Versorgung der elektrischen Verbrauchsgeräte verwendet.

Informationen (z.B. Schaltbefehle und Meldungen) zwischen den einzelnen Busteilnehmern werden im EIB-System über sogenannte Telegramme ausgetauscht, wobei die Informationen auf der Busleitung symmetrisch übertragen werden, d.h. als Spannungsdifferenz zwischen den beiden Busadern mit definierter Polarität und nicht als Spannungsdifferenz gegenüber Erde.

Der vorliegenden Erfindung liegt die Aufgabe zugrunde, eine polaritätsrichtige Kontaktierung an einen Bus mit polaritätsunterschiedlichen Leitungen sicherzustellen.

Zur Lösung dieser Aufgabe führt, dass durch einen Polaritätswandler, der derart ausgestaltet ist, unabhängig von der Polarität von Signalen, die an der einen Seite des Polaritätswandlers angelegt werden, die Signale auf der anderen Seite des Polaritätswandlers nach ihrer Polarität getrennt ausgegeben werden.

Nach der Erfindung erfolgt die Ankopplung an einen Bus mit polaritätsunterschiedlichen Leitungen mittels eines Polaritätswandlers, der derart ausgestaltet ist, dass unabhängig von der Polarität von Signalen, die busseitig an den Polaritätswandlers angelegt werden, die Signale auf der anderen Seite (anwendungsseitig) des Polaritätswandlers nach ihrer Polarität getrennt ausgegeben werden.

Durch die Busankopplung mittels des erfindungsgemässen Polaritätswandlers wird das Anschliessen deutlich vereinfacht, da die Polarität der Busleitungen völlig unerheblich ist. Polaritätsanschlussfehler werden so vermieden. Zudem kann das Anschliessen schneller und sicherer erfolgen, da die Polaritäten der Busleitungen nicht mehr zu prüfen sind. Dies erlaubt insbesondere auch ein Anschliessen durch nicht-ausgebildete Personen, so dass die Anschlusskosten erheblich reduziert werden können.

Weiterhin müssen keine zusätzlichen Bauteile vorgesehen werden, um den Busankoppler vor Fehlanschlüssen durch falsche Polarisation zu schützen. Entsprechende Schutzdioden können beispielsweise entfallen, was wiederum zu einer Kostenreduzierung beiträgt.

Der Polaritätswandler stellt vorzugsweise zentral die polaritätsunabhängige Ankopplung des gesamten Busankopplers sicher, wobei eine Vielzahl anwendungsseitiger Baugruppen an den Polaritätswandler angekoppelt werden können. Allerdings kann auch für jede oder eine Vielzahl anwendungsseitiger Baugruppen jeweils ein eigener (dezentraler) Polaritätswandler, beispielsweise aus ökonomischen Gründen, vorgesehen werden.

In einer bevorzugten Ausführungsform der Erfindung ist der Polaritätswandler durch einen Brückengleichrichter implementiert, der auch mit Schottky-Dioden, Fast-Recovery-Dioden od. dgl. bestückt sein kann. Der aus dem Bereich der Wechselspannungsgleichrichtung bekannte Brückengleichrichter stellt in besonders kostengünstiger Weise durch eine geeignete Brückenschaltung von Dioden die Polaritätswandlung sicher.

Als Polaritätswandler lassen sich weiter auch insbesondere Phasenumkehr-ICs, wie beispielsweise die Baureihen MAX4526, MAX4527 oder MAX4528 der Firma MAXIM, oder Optokoppler verwenden. Letztere sind in ihrem Einsatz jedoch durch ihren erhöhten Energieverbrauch begrenzt. Die Erfindung findet vorzugsweise Anwendung für die Ankopplung an einen EIB, ist allerdings nicht auf diesen beschränkt sondern lässt sich für die Anwendung an polaritätsunterschiedliche Bussysteme mit zwei oder mehr (polaritätsunterschiedlichen) Leitern einsetzen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen typischen, im Stand der Technik bekannten EIB-Teilnehmer;
Figur 2 ein allgemeines funktionales Ersatzschaltbild eines erfindungsgemässen Polaritätswandlers;
Figur 3 einen erfindungsgemässen Busankoppler;
Figur 4a und 4b eine bevorzugte Ausführungsform des erfindungsgemässen Polaritätswandlers in Form eines Brückengleichrichters;
Figur 5 eine bevorzugte Ausführungsform des Busankopplers.

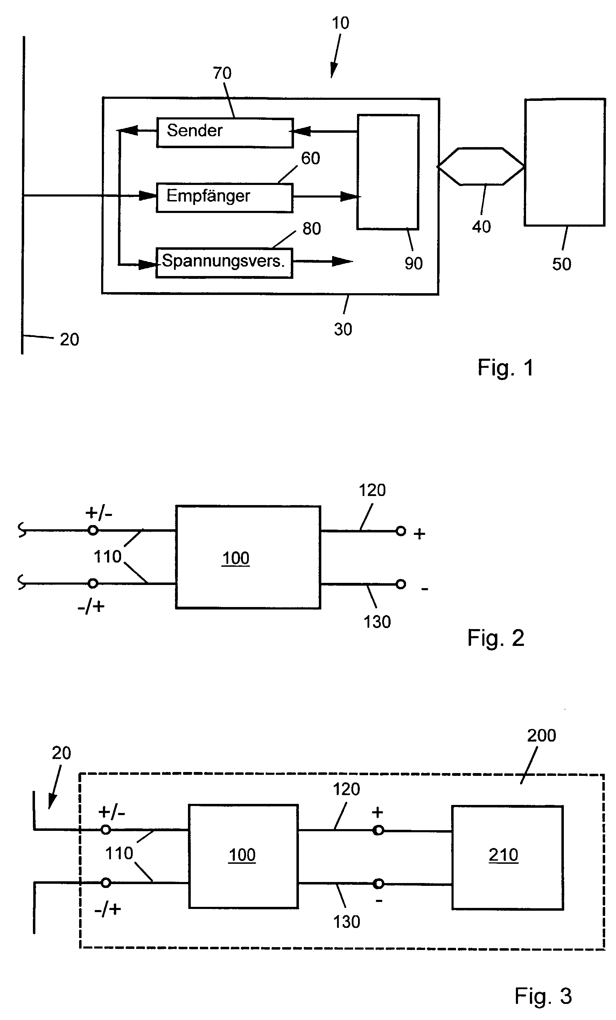

Fig. 1 zeigt einen typischen EIB-Teilnehmer 10, der im allgemeinen einen, an einen Bus 20 (den EIB) angekoppelten Busankoppler 30 und ein damit über eine Anwendungsschnittstelle 40 verbundenes Anwendungsmodul / Endgerät 50 aufweist. Zu verarbeitende Informationen gelangen über den Bus 20 zuerst an den Busankoppler 30, der mittels eines Empfängers 60 Daten empfangen kann. Entsprechend weist der Busankoppler 30 einen Sender 70 auf, mit dem er Daten über den Bus 20 an weitere Busteilnehmer senden kann. Eine Spannungsversorgung 80 stellt die elektrische Versorgung der angeschlossenen Elektronik sicher. Gesteuert werden die Funktionen des Busankopplers 30 von einem Mikroprozessor 90. Je nach Ausführung des EIB-Teilnehmers 10 sind der Busankoppler 30 und das Anwendungsmodul / Endgerät 50 steckbar oder untrennbar in einem Gehäuse integriert.

Zur Inbetriebnahme des EIB-Teilnehmers 10 muss der Busankoppler 30 polaritätsrichtig sowohl mit einer negativ (- Ader) als auch einer positiv (+ Ader) gepolten Ader des Busses 20 in Verbindung gebracht werden. In der Praxis treten dabei immer wieder Probleme durch polaritätsunrichtige Kontaktierungen des Busankopplers 30 auf, was zu Betriebsstörungen dieses Busankopplers 30 führt.

Typische, im Stand der Technik bekannte Lösungen zur Sicherstellung einer polaritätsrichtigen Ankopplung an einen Bus sind beispielsweise mechanische Codierungen sowohl auf Seiten des Busses als auch der Busankopplung, was jedoch einen gewissen (mechanischen) Aufwand erfordert und für bestimmte Bussysteme, wie den EIB, nur beschränkt oder überhaupt nicht anwendbar ist.

Fig. 2 zeigt ein allgemeines funktionales Ersatzschaltbild eines erfindungsgemässen Polaritätswandlers 100. Unabhängig von der (entgegengesetzten) Polarität eines Eingangsleitungspaares 110, weist ein Ausgangsleiter 120 des Polaritätswandlers 100 immer eine positive Polarität und ein Ausgangsleiter 130 immer eine negative Polarität auf.

Fig. 3 stellt einen erfindungsgemässen Busankoppler 200 dar, der eine Funktionsgruppe 210 aufweist, die über den Polaritätswandlers 100 an den Bus 20 angekoppelt ist. Unabhängig von der Polarität des Busleiterpaares 20 stellt der Ausgangsleiter 120 des Polaritätswandlers 100 der Funktionsgruppe 210 immer eine positive Polarität und der Ausgangsleiter 130 immer eine negative Polarität gegenüber. Der Bus 20 ist vorzugsweise ein EIB, wie eingangs beschrieben, und die Funktionsgruppe 210 stellt vorzugsweise die mit dem Referenzzeichen 30 in Fig. 1 dargestellten Baugruppen dar. Dabei ist zu verstehen, dass auch für jede der Baugruppen 60, 70 und/oder 80 ein separater Polaritätswandlers 100 vorgesehen werden kann.

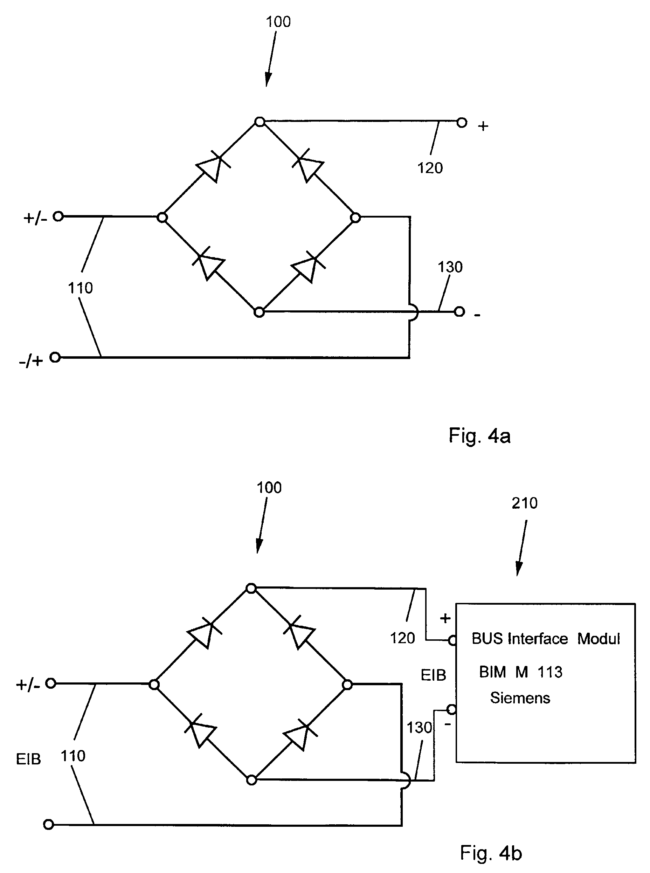

Fig. 4a zeigt eine bevorzugte Ausführungsform des erfindungsgemässen Polaritätswandlers 100 in Form eines Brückengleichrichters in aus dem Bereich der Wechselstromgleichrichtung bekannter Schaltung. Zwischen dem Eingangsleitungspaar 110 und dem Ausgangsleiter 120 ist jeweils eine Diode in Stromrichtung (von plus nach minus) geschaltet. Entsprechend ist zwischen dem Eingangsleitungspaar 110 und dem Ausgangsleiter 130 jeweils eine Diode entgegen Stromrichtung geschaltet.

In dem Ausführungsbeispiel gemäss Figur 4b ist einem herkömmlichen Busankoppler, insbesondere als Funktionsgruppe 210 beziffert, der in Figur 4a beschriebene Polaritätswandler in Form eines Brückengleichrichters vorgeschaltet. Es hat sich als vorteilhaft erwiesen, an eine derartige Funktionsgruppe den Polaritätswandler 100 zum polaritätsunabhängigen Betreiben vorzuschalten. Das BUS Interface Modul vom Typ BIM M 113 der Firma Siemens (Siemens Nr. 5 WGI 113-8A AOI) eignet sich besonders zum Nachrüsten mit einem entsprechenden, oben beschriebenen Polaritätswandler 100.

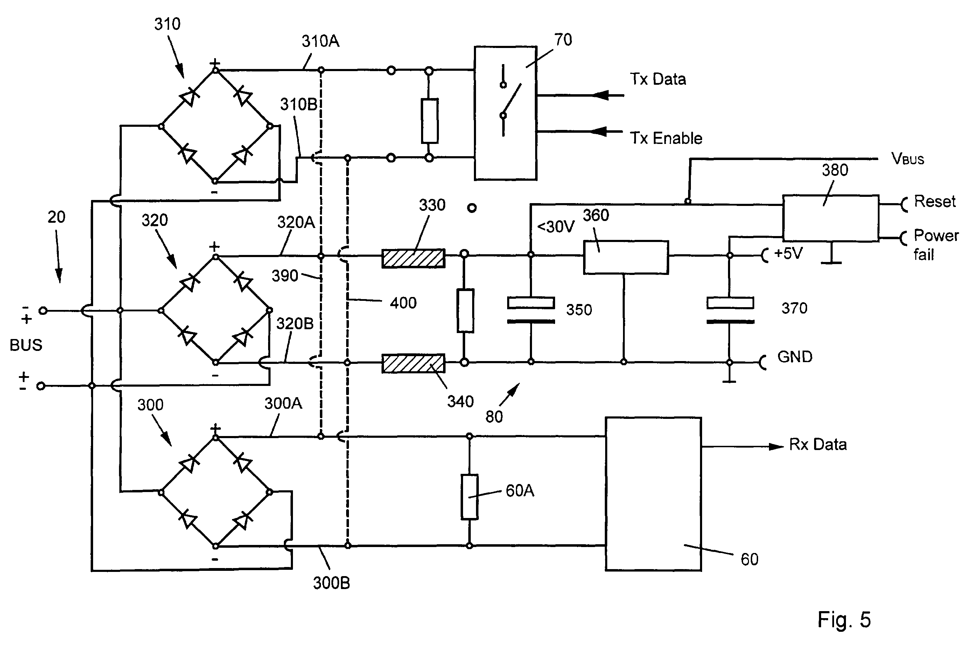

In Fig. 5 ist eine bevorzugte Ausführungsform des Busankopplers 200 dargestellt. An den Bus 20 koppeln parallel drei Brückengleichrichter 300, 310 und 320. Unabhängig von der Polarität der Busleitungen, liefern die drei Brückengleichrichter 300, 310 und 320 jeweils Leitungen 300A, 310A oder bzw. 320A mit positiver Polarität und Leitungen 300B, 310B oder bzw. 320A mit negativer Polarität. An die Leitungen 300A und 300B koppelt der Empfänger 60, vorzugsweise über einen Parallelwiderstand 60A (z.B. 500kΩ), der vom Bus 20 ankommende Signale empfängt. Der Sender 70 koppelt an die Leitungen 310A und 310B und sendet, gesteuert durch ein Signal TxENABLE Daten TxDATA über den Bus 20 an andere Busteilnehmer. Die Spannungsversorgung 80 wird gespeist von den Leitungen 320A und 320B und weist eingangs Seriendrosseln 330 und 340 und eine Parallelkapazität 350 (z.B. etwa 220 µF) zwischen den Leitern auf. Ein Schaltregler 360 liefert an seinem Ausgang einen definierten Spannungswert (z.B. etwa 5V), vorzugsweise über eine Parallelkapazität 370 (z.B. etwa 1000 µF). Eine Reset-Logik 380 erhält als Eingang sowohl die Spannung V_{BUS}, abgegriffen nach der Seriendrossel 330, als auch die Ausgangsspannung des Schaltreglers 360 und liefert davon abgeleitet ein Rücksetzsignal RESET und ein Spannungskontrollsignal POWER FAIL.

Anstelle der in Fig. 5 gezeigten drei parallelen Brückengleichrichter 300, 310 und 320 kann auch lediglich einer der drei Brückengleichrichter 300, 310 und 320 verwendet werden. Die Baugruppen 60, 70 und 80 koppeln dann parallel, in Fig. 5 durch Leitungen 390 und 400 gestrichelt dargestellt, an zumindest einen der Brückengleichrichter 300, 310 und 320.

## Patentansprüche

1. Vorrichtung (200) zur Ankopplung an einen Bus (20) mit polaritätsunterschiedlichen Leitungen, gekennzeichnet durch einen Polaritätswandler (100), der derart ausgestaltet ist, dass unabhängig von der Polarität von Signalen, die an der einen Seite des Polaritätswandlers angelegt werden, die Signale auf der anderen Seite des Polaritätswandlers nach ihrer Polarität getrennt ausgegeben werden.

2. Die Vorrichtung (200) nach Anspruch 1, dadurch gekennzeichnet, dass der Polaritätswandler (100) zentral an den Bus (20) ankoppelt und eine oder mehrere Baugruppen anwendungsseitig an den Polaritätswandler (100) angekoppelt sind.

3. Die Vorrichtung (200) nach Anspruch 1, dadurch gekennzeichnet, dass für eine oder mehrere anwendungsseitiger Baugruppen (60, 70, 80) jeweils ein Polaritätswandler (100) vorgesehen ist.

4. Die Vorrichtung (200) nach einem der Ansprüche 1-3, dadurch gekennzeichnet, dass der Polaritätswandler (100) einen Brückengleichrichter aufweist.

5. Die Vorrichtung (200) nach einem der Ansprüche 1-3, dadurch gekennzeichnet, dass der Polaritätswandler (100) einen Phasenumkehr-IC oder einen oder mehrere Optokoppler aufweist.

6. Die Vorrichtung 200 nach wenigstens einem der Ansprüche 1 bis 4, dadruch gekennzeichnet, dass zumindest einer Funktionsgruppe (210) insbesondere Busankoppler über zumindest einen Polaritätswander (100) an den BUS angekoppelt ist.

7. Busankoppler (200) zur Ankopplung eines Anwendungsmoduls/Endgerätes (50) an einen Bus (20), vorzugsweise einen Europäischen Installationsbus - EIB -, mit polaritätsunterschiedlichen Leitungen, wobei der Busankoppler (200) mindestens eine Funktionsgruppe (210), wie einen Empfänger (60), einen Sender (70) und/oder eine Spannungsversorgung (80), aufweist, dadurch gekennzeichnet, dass die oder mehrere Funktionsgruppe/n (210) über zumindest einen Polaritätswandlers (100), vorzugsweise einen Brückengleichrichter, an den Bus angekoppelt ist/sind.

8. Verwendung eines Brückengleichrichters zur polaritätsunabhängigen Ankopplung einer Schaltung an einen Bus (20) mit polaritätsunterschiedlichen Leitungen.
